(19) **Europäisches Patentamt**
**European Patent Office**
**Office européen des brevets**

(11) **EP 3 955 439 A1**

(12) **EUROPEAN PATENT APPLICATION**

(43) Date of publication:
**16.02.2022 Bulletin 2022/07**

(21) Application number: **20191115.3**

(22) Date of filing: **14.08.2020**

(51) International Patent Classification (IPC):
**H02K 21/44** (2006.01)    **H02K 35/06** (2006.01)
**H02K 41/03** (2006.01)    **B62J 6/12** (2006.01)

(52) Cooperative Patent Classification (CPC):
**H02K 21/44; H02K 35/06; H02K 41/033;**
H02K 2201/12; H02K 2201/15; H02K 2213/03

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Ventspils Augstskola**
**Ventspils 3600 (LV)**
• **Latvo AS**
**Riga 1005 (LV)**

(72) Inventors:
• **BEZRUKOVS, Valerijs**
**LV-3600 Ventspils (LV)**

• **BEZRUKOVS, Vladislavs**
**LV-3601 Ventspils (LV)**
• **BEZRUKOVS, Deniss**
**LV-1010 Riga (LV)**
• **KONUHOVA, Marina**
**LV-1021 Riga (LV)**
• **BERZINS, Agris**
**LV-1035 Riga (LV)**

(74) Representative: **Vitina, Maruta et al**
**Agency TRIA ROBIT**
**P.O. Box 22**
**1010 Riga (LV)**

Remarks:
Amended claims in accordance with Rule 137(2) EPC.

(54) **MAGNETIC FLUX SWITCHING TYPE PERMANENT MAGNET GENERATOR**

(57) The invention relates to the field of electrical engineering and can be used as a generator for bicycles. The technical task solved by the present invention is to increase the specific power of the permanent magnet generator by reducing the scattering flows. A magnetic flux switching type permanent magnet generator includes a magnetic flux switch connected to a drive and an inductor comprising four permanent magnets and two pairs of magnetic open cores having inner rods (3, 4, 7, 8) and outer rods (2, 5, 6, 9) with windings (10, 11), in the form of a tape (12) of magnetic flux switches with toggle switches (13), the two pairs of magnetic open-cores being arranged opposite each other on opposite sides of the switch tape (12). The teeth (14) of the rods are separated from the toggle switches (13) by air gaps - $\delta_1$ and $\delta_2$. One end of the first magnetic bridge (20) rests on the surface of the first magnet (1) and one end of the second magnetic bridge (21) rests on the surface of the second magnet (17) with the same polarity, while the other end of the first magnetic bridge (20) rests on the third magnet (18) surface and the other end of the second magnetic bridge (21) rests on the surface of the fourth magnet (19) of opposite polarity, the free surface of the first magnet (1), the second magnet (17), the third magnet (18) and the fourth magnet (19) are pressed with the other polarity, respectively, on the side surface of the opposite outer magnetic rods (2, 6, 5, 9) through four metal gaskets (22, 23, 24, 25), the magnetic fluxes in each pair of magnetic open-cores in the adjacent inner rods (3, 4, 7, 8) are oriented in one direction.

**Fig. 2**

**Description**

The invention relates to the field of electrical engineering, more specifically to alternating current electrical devices with a movable magnetic flux switch and a fixed anchor with a magnet, as well as an anchor winding encapsulating the anchor magnetic open-cores and can be used as a generator, e.g. for bicycles.

There is a known bicycle generator [1], which consists of a housing, inside which fixed anchor magnetic open-cores with windings and a rotating rotor with a permanent magnet are arranged. The generator rotor is connected to a shaft at the end of which a roller is attached. The generator housing is attached to the fork of a bicycle wheel and has a pressing mechanism that presses the roller against the tire of the bicycle wheel.

As the bicycle wheel rotates, the rotor with the permanent magnet begins to rotate and magnetises the anchor magnetic open-core. As a result, an AC voltage is generated at the winding terminals, the magnitude of which depends on the rotational speed of the bicycle wheel.

The torque is transferred from the bicycle wheel to the generator rotor via a friction-type transmission, thereby the amount of said torque depends on the force with which the roller is pressed against the wheel tire. This results in additional losses in the wheel bearing, which significantly reduces the overall efficiency of such a design.

A contactless bicycle generator [2] is known, which comprises an anchor with a fixed layered magnetic open-core and annular windings enclosing the magnetic open-core anchor. The permanent magnet in the generator design is in the form of a cylinder in which a coiled magnetic open-core is arranged. In addition, the entire design is housed in the hub of a bicycle wheel. The anchor magnetic open-core is formed with hook-shaped protrusions on the side surface, which cover the windings on both sides. In addition, these hooks are offset relative to each other and arranged in a certain step, around all the annular windings. The permanent magnet is separated from the hook-shaped protrusions of the anchor's magnetic open-cores by air gaps and can rotate relative to the magnetic open-core anchor with windings placed rigidly on the axis of the bicycle wheel. On the inner surface of the magnet a multi-pole system with a number of poles and a step corresponding to a pole system made of hook-shaped ridges is formed. As a result, the magnetic flux from one pole of the permanent magnet passes through the nearest hook ridge to the cylindrical part of the magnetic open-core anchor and connects to the other pole through the respective hook ridge, which is offset by the same step as the opposite pole of the permanent magnet. Since the number of magnet poles corresponds to the number of hook ridges, in the static state the magnetic flux from one polarity pole is evenly distributed over all hook ridges on one side and connects to the opposite polarity poles passing around the annular windings through the anchor magnetic open-cores and hook ridges on the other half. As the bicycle moves, the hub rotates with the wheel, and the poles of the permanent magnet move relative to the hook ridges. There is a change in the polarity of the permanent magnet above the hook ridges, and the magnetic flux in the anchor's magnetic open-core changes direction accordingly. Thereby, the anchor windings appear to be connected to an alternating current magnetic flux in a load circuit connected to the input terminals, and an AC current is generated at a frequency corresponding to the rotational speed of the bicycle wheels. Thus, the windings are located on a fixed part of the bicycle, the ends of the windings are led out through an opening in the wheel axle to connect the generator to the load. Although this type of generators has positive technical characteristics, it has a very complex design that is difficult to manufacture. The generator housing is also part of the bicycle wheel, so if one unit is damaged, it is necessary to replace both units at once. Therefore, the above-mentioned factors make both the production of the generator and its repair more expensive.

The closest prior art to the present invention is a magnetic flux switching type permanent magnet generator [3], which comprises a magnetic flux switch connected to a drive and an inductor comprising a permanent magnet and two pairs of magnetic open-cores made of laminated silicon steel with inner rods and outer rods, and on which the adjacent inner rods are wound, the magnetic flux switch is in the form of a tape with recesses in an even step $\tau_z$ magnetic toggle switches made of laminated silicon steel are located and fixed, with the two pairs of magnetic open-cores facing each other on opposite sides of the switch tape. The distance between the teeth at the ends of the rods for each pair of magnetic open-cores and toggle switches is determined according to the equation,

$$\tau_1 = \left(k + \frac{1}{2}\right)\tau_z, \tag{1}$$

wherein, $k$= 1, 2, 3... is the number of pairs of teeth for each magnetic open-cores, the teeth are separated from the toggle switches with air gaps - $\delta_1$ and $\delta_2$.

The distance between the rods adjacent to the magnetic open-cores is determined according to the equation

$$\tau_2 = k\,\tau_z, \tag{2}$$

the teeth of each pair of magnetic open-cores are fixed by inserting them into the openings of the plates, while the layers of laminated silicon steel are arranged perpendicular to the direction of movement of the switch tape.

A disadvantage of the known design of a permanent magnet generator is the low efficiency of the use of the magnetic open-cores of the permanent magnet, which reduces the specific power of the generator.

The technical task solved by the present invention is to increase the specific power of the permanent magnet generator by reducing the scattering flows.

A magnetic flux switching type permanent magnet generator comprising a magnetic flux switch connected to a drive and an inductor comprising one permanent magnet and two pairs of magnetic open-cores made of laminated silicon steel having rods, divided into inner rods and outer rods and on which adjacent pairs of inner rods are the windings are placed, the magnetic flux switch is formed in the form of a tape in which magnetic toggle switch made of laminated silicon steel are placed and secured in the slots in an uniform step $\tau_z$, wherein the two pairs of magnetic open-cores facing each other on opposite sides of the switch tape, the distance between teeth at the ends of the inner rods and the outer rods for each pair of the magnetic open-cores and the toggle switch is determined according to the equation (1), wherein $k$ = 1, 2, 3... is the number of pairs of the teeth for each magnetic open-cores, the teeth are separated from the toggle switch by air gaps - $\delta_1$ and $\delta_2$ , the distance between the adjacent rods in each pair of the magnetic open-cores is determined according to the equation (2), the teeth of the each pair of magnetic open-cores are fixed by inserting them into the openings of the plates, the layers of laminated silicon steel are arranged perpendicular to the direction of movement of the switch tape, according to the current invention, the permanent magnet generator is additionally equipped with three magnets and two magnetic bridges, one end of the first magnetic bridge rests on the surface of the first magnet and one end of the second magnetic bridge rests on the surface of the second magnet with the same polarity, while the other end of the first magnetic bridge rests on the surface of the third magnet and the other end of the second magnetic bridge rests on the surface of the fourth magnet of opposite polarity, the free surfaces of the first magnet, the second magnet, the third magnet and the fourth magnet with the second polarity are pressed against the side surfaces of the outer rods of the opposite magnetic open-cores, respectively, through four metal gaskets, wherein the magnetic fluxes in each pair of the magnetic open-cores in the adjacent inner rods being directed in one direction.

The magnetic flux switch tape with a plurality of toggle switches attached to said tape can be formed in the form of a closed loop and placed on the edges of the disk, which is connected to a rotary drive.

When $k>$ 1 for all four metal gaskets in their plane facing the air gaps $\delta_1$ and $\delta_2$, rectangular grooves are made. These grooves can be equal to the distance between the rods under each of the four magnets.

The magnetic flux switch tape could be connected to a linear reciprocating drive by a plurality of the toggle switches mounted therein.

The essence of the invention is explained by the drawings:

Fig. 1 shows a permanent magnet generator for which $k$ = 1, and its horizontal section of the magnetic flux switch in top view, with the indicated directions of magnetic fluxes;
Fig. 2 shows the left side view on the windings, the first and third magnets, the metal gaskets, the first magnetic bridge, as well as on the switch tape with toggle switches attached to said tape and, on the plates, shown in the front section;
Fig. 3 shows a permanent magnet generator for which $k$ = 2, one pair of magnetic open-cores, one winding, metal gaskets, switch tape with toggle switches attached to it and a horizontal section of the plate in top view, with the directions of magnetic fluxes;
Fig. 4. shows a permanent magnet generator for which $k$ = 2, frontal section of one pair of magnetic open-cores, magnetic bridges, first and second magnets and metal gaskets, with the directions of magnetic fluxes.

These drawings show a magnetic flux switching type permanent magnet generator, comprising a magnetic flux switch connected to a drive and an inductor comprising a first permanent magnet (1) and two pairs of laminated silicon steel magnetic open-cores having rods (2 to 9) divided into inner rods (3, 4, 7, 8) and outer rods (2, 5, 6, 9) and on which adjacent inner rods pairs (3, 4) and (7, 8) are arranged windings (10 and 11), the magnetic flux switch is formed in the form of a tape (12), which will be recessed in an uniform step $\tau_z$ toggle switches made of laminated silicon steel (13) are located and fixed.

The two pairs of magnetic open-cores are located opposite each other on opposite sides of the switch tape (12), but the distance between the teeth (14) at the ends of the inner rods (3, 4, 7, 8) and the outer rods (2, 5, 6, 9) for each pair of magnetic open-cores and for toggle switches (13) is determined according to equation (1), where $k$ is the number of pairs of teeth (14) for each magnetic open-core.

Teeth (14) are separated from toggle switches (13) with air gaps - $\delta_1$ and $\delta_2$, in addition, the distance between adjacent rods (2 - 9) in each pair of magnetic open-cores is determined according to equation (2). Each pair of magnetic open-cores the teeth (14) are fixed by inserting them in the openings of plates (15, 16) made of dielectric non-magnetic material, but the layers of laminated silicon steel are arranged perpendicular to the direction of movement of the switch tape (12).

The permanent magnet generator is additionally equipped with three magnets - a second magnet (17), a third magnet (18) and a fourth magnet (19) and two magnetic bridges (20, 21). One end of the first magnetic bridge (20) rests on the surface of the first magnet (1) and one end of the second magnetic bridge (21) rests on the surface of the second magnet (17) with the same polarity, while the other end of the first magnetic bridge (20) rests on the surface of the third magnet (18) and the other end of the second magnetic bridge (21) rests on the surface of the fourth magnet (19) of opposite polarity. The free surfaces of the first magnet (1), the second magnet (17), the third magnet (18) and the fourth magnet (19) with the second polarity are pressed against the side surfaces of the outer rods (2, 6, 5, 9) of the opposite magnetic open-cores, respectively, through four metal gaskets (22, 23, 24, 25). Wherein the magnetic fluxes in each pair of the magnetic open-cores in the adjacent inner rods (3, 4, 7, 8) being directed in one direction.

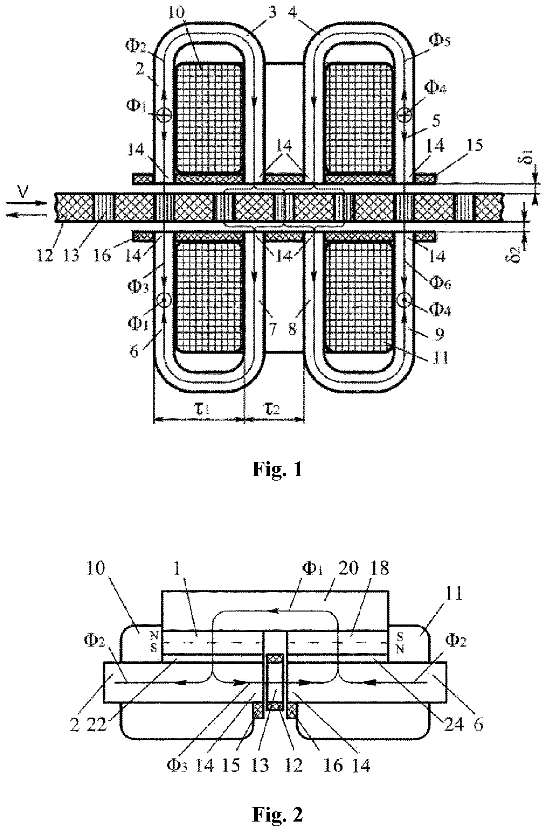

In Fig. 1 - the windings (10, 11) and the magnetic open-cores are shown, the teeth (14) of which are fixed by inserting them in the openings of plates (15, 16) made of dielectric non-magnetic material, in relation to the switch tape (12) with toggle switches (13), separated by air gaps - $\delta_1$ and $\delta_2$. Magnetic flux $\Phi_1$ - $\Phi_6$, directions are indicated by arrows. In each magnetic open-core, the distance between the teeth (14) is denoted by $\tau_1$. The distance between adjacent teeth (14) is indicated by $\tau_2$. The arrows V indicate the possible direction of travel of the switch tape (12). The switch tape (12) with a number of toggle switches (13) attached to it is connected to a linear reciprocating drive (not shown in Figs.).

In Fig. 2 are shown the windings (10, 11), the switch tape (12) with toggle switches (13) attached to it. The arrows show the magnetic flux $\Phi_1$, $\Phi_2$ and $\Phi_3$ the direction from the poles N - S of the first magnet (1) and the third magnet (18) through the first magnetic bridge (20), the outer rods (2, 6) of the magnetic open-cores and the metal gaskets (22), (24).

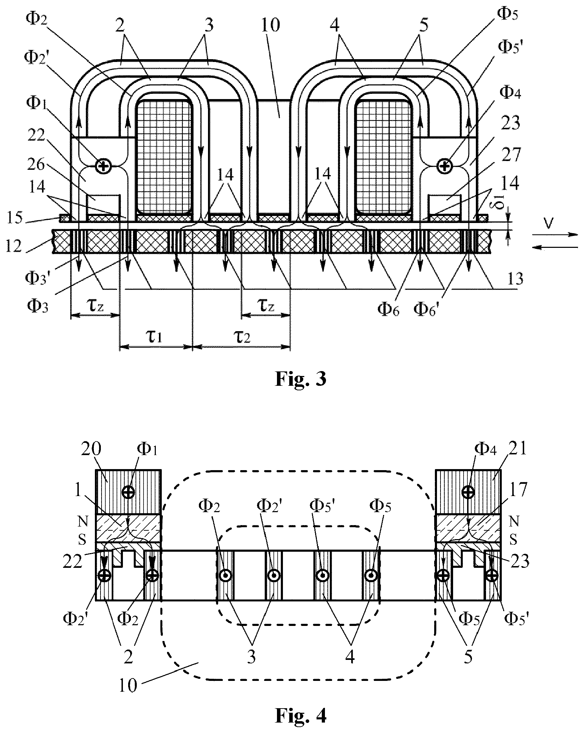

In Fig. 3 is shown a permanent magnet generator for which k = 2, the position of one pair of magnetic open-cores in which the teeth (14) are inserted in the openings of the plate (15) and the direction of the magnetic fluxes $\Phi_1$, $\Phi_4$ in metal gaskets (22, 23) and $\Phi_2$, $\Phi'_2$, $\Phi_3$, $\Phi'_3$ in rods (2, 3) and $\Phi_5$, $\Phi'_5$, $\Phi_6$, $\Phi'_6$ rods. The distance between the teeth (14) corresponds to the step $\tau_z$. The arrows V indicate the possible direction of travel of the switch tape (12). The switch tape (12) with a number of toggle switches (13) attached to it is connected to a linear reciprocating drive (not shown in Figs.).

In the plane of all four metal gaskets (22, 23, 24, 25), on the sides of air gaps $\delta_1$ and $\delta_2$ there are rectangular grooves (26, 27, 28, 29) equal to the distance between the rods under each of the four magnets (1, 17, 18, 19).

Fig. 4. shows the vertical section of the magnetic open-cores of the permanent magnet generator for the number k = 2. The position of the windings (10) is shown schematically. The arrows show the magnetic flux $\Phi_1$, $\Phi_2$ and $\Phi'_2$, $\Phi_4$, $\Phi_5$ and $\Phi'_5$, directions formed by the first magnet (1) and the second magnet (17), the poles of which are denoted by N and S.

The switch tape (12) with a plurality of toggle switches (13) attached to it can be formed in the form of a closed hoop and placed on a disk which is connected to a rotary drive (not shown in the Figs.).

The permanent magnet generator operates as follows.

When the permanent magnet generator is in a static state, magnetic currents $\Phi_1$ are created with permanent magnets (1, 17, 18, 19), $\Phi_4$ passing through magnetic bridges (20, 21) and metal gaskets (22, 23, 24, 25), where it divides into four flux $\Phi_2$, $\Phi_3$, $\Phi_5$, $\Phi_6$. Fluxes $\Phi_2$, $\Phi_5$ passes through the inner rods (3, 4, 7, 8) on which the windings (10, 11) are located, while the flows $\Phi_3$, $\Phi_6$ not related to these windings.

In a permanent magnet generator constructed according to equations (1) and (2), the toggle switches (13) are offset relative to a pair of teeth (14) relating to the inner rods (3, 4, 7, 8) by a value of $\tau_1/2$. In this case, when the switch tape (12) moves, the resistance of the magnetic open-cores circuit and the magnetic flux $\Phi_2$, $\Phi_5$ and $\Phi_3$, $\Phi_6$ the values vary in the opposite phase from the minimum to the maximum value.

Figure 1 shows the arrangement of the toggle switches (13) in which the outer rods (2, 5, 6, 9) flow $\Phi_3$, $\Phi_6$ values have a maximum value, but in the inner rods (3, 4, 7, 8) the flow $\Phi_2$, $\Phi_5$ values have a minimum value.

Air gaps are formed for the free movement of the switch tape (12) between the teeth (14) $\delta_1$ and $\delta_2$. During the movement of the switch tape (12), the values of the magnetic fluxes of the rods will change, but their sum will remain constant and accordingly equal

$$\Phi_1 = \Phi_2 + \Phi_3, \qquad\qquad (3)$$

$$\Phi_4 = \Phi_5 + \Phi_6. \qquad\qquad (4)$$

Thus, magnetic bridges (20, 21) and metal gaskets (22, 23, 24, 25) will not have magnetic flux pulsations, which allows them to be made of iron. At the same time, the open magnetic conductors and toggle switches (13) are made of laminated silicon steel to reduce magnetic losses.

The metal gaskets (22, 23, 24, 25) serve to distribute the magnetic flux of the magnets evenly on the side surface of the magnetic open-cores. The switch tape (12) and the plates (15, 16) which fix the arrangement of the teeth (14) are made of non-magnetic material and do not affect the operation of the generator.

The proposed design of the permanent magnet generator, in which the magnets (1, 17, 18, 19) are placed on the outer rods (2, 6 and 5, 9) of the magnetic open cores and are connected to the magnetic bridges (20, 21), allows to significantly reduce the magnetic workflow $\Phi_2$ and $\Phi_5$, which pass through the inner rods (3, 7 and 4, 8) of the magnetic open-cores. As a result, the weight of the magnetic system of the permanent magnet generator is reduced and the scattering flows are reduced, thus increasing the specific power and operating efficiency of the permanent magnet generator.

As a result of the pulsation of the magnetic fluxes in the inner rods (3, 7 and 4, 8) of the magnetic open-cores, electromagnetic force (EMF) is induced in the windings (10, 11), the frequency of which depends on the speed V of the switch tape (12).

In all four metal gaskets (22, 23, 24, 25) in their plane facing the air gaps $\delta_1$ and $\delta_2$, the created rectangular grooves (26, 27, 28, 29) further improve the sinusoidality of the EMF.

Inductor formed by a number of pairs of teeth (14) equal to $k = 2$ (see Figs 3, 4), allows to increase the area of magnetic open-cores and reduce their magnetic resistance.

The tape (12) can be connected to a linear drive, in which case the cyclic switching of the magnetic flux is performed by a reciprocating drive. In addition, the tape (12) can be shaped in the form of a hoop and placed on a disk connected to a rotary motion drive. In this case, both the inductor and the magnetic flux switch can be easily adapted to be mounted on the wheel hub of all existing bicycle models.

The proposed permanent magnet generator can be used as an AC power source for bicycles.

**Sources of information:**

1. Publication of the patent application JP2004182183A, publ, 02.07.2004, B62J6/00; B62J6/08; H02K3/46; H02K5/00; H02K5/22; H02K5/26; H02K7/18.

2. Publication of the patent application EP1270389A2, publ. 02.01.2003, B62J6/00; B62J6/12; H02K5/00, H02K5/02; H02K7/18; H02K21/24.

3. Publication of the patent application LV15501A, publ. 20.05.2020 H02K35/06 (The closest prior art).

**Claims**

**1.** A magnetic flux switching type permanent magnet generator comprising a magnetic flux switch connected to a drive and an inductor comprising one permanent magnet (1) and two pairs of magnetic open-cores made of laminated silicon steel having rods (2-9), divided into inner rods (3, 4, 7, 8) and outer rods (2, 5, 6, 9) and on which adjacent pairs of inner rods (3, 4) and (7, 8) are windings (10) and (11), the magnetic flux switch is formed in the form of a tape (12) in which magnetic toggle switch (13) made of laminated silicon steel are placed and fixed in the slots in an uniform step $\tau_z$, wherein the two pairs of magnetic open-cores facing each other on opposite sides of the switch tape (12), the distance between teeth (14) at the ends of the inner rods (3, 4, 7, 8) and the outer rods (2, 5, 6, 9) for each pair of the magnetic open-cores and the toggle switch (13) is determined according to the equation

$$\tau_1 = \left(k + \frac{1}{2}\right)\tau_z, \qquad\qquad (1)$$

wherein $k= 1, 2, 3...$ is the number of pairs of the teeth (14) for each magnetic open-cores, the teeth (14) are separated from the toggle switch (13) by air gaps - $\delta_1$ and $\delta_2$, the distance between the adjacent rods (2 - 9) in the each pair of magnetic open-cores is determined according to the equation

$$\tau_2 = k\,\tau_z \qquad\qquad (2)$$

the teeth (14) of the each pair of magnetic open-cores are fixed by inserting them into the openings of the plates (15, 16), the layers of laminated silicon steel are arranged perpendicular to the direction of movement of the switch tape (12), **characterized in that** the permanent magnet generator is additionally equipped with three magnets (17, 18, 19) and two magnetic bridges (20, 21), one end of the first magnetic bridge (20) rest on the surface of the first magnet (1) and one end of the second magnetic bridge (21) rest on the surface of the second magnet (17) with the same polarity, while the other end of the first magnetic bridge (20) rests on the surface of the third magnet (18) and the other end of the second magnetic bridge (21) rests on the surface of the fourth magnet (19) of opposite polarity, the free surfaces of the first magnet (1), the second magnet (17), the third magnet (18) and the fourth magnet (19) with the second polarity are pressed against the side surfaces of the outer rods (2, 6, 5, 9) of the opposite magnetic open-cores, respectively, through four metal gaskets (22, 23, 24, 25), wherein the magnetic fluxes in the each pair of magnetic open-cores in the adjacent inner rods (3, 4, 7, 8) being directed in one direction.

2. The permanent magnet generator according to claim 1, **characterized in that** the magnetic flux switch tape (12) with a plurality of toggle switch (13) attached to said tape (12) is in the form of a closed loop and is arranged on a disk which is connected to a rotary drive.

3. The permanent magnet generator according to claim 1, **characterized in that** when $k > 1$ in all four metal gaskets (22, 23, 24, 25) in their plane facing the air gaps $\delta_1$ and $\delta_2$, rectangular grooves (26, 27, 28, 29) are made.

4. The permanent magnet generator according to claim 1, **characterized in that** the magnetic flux switch tape (12) is connected to a linear reciprocating drive by a plurality of the toggle switch (13) mounted therein.

**Amended claims in accordance with Rule 137(2) EPC.**

1. A magnetic flux switching type permanent magnet generator comprising a magnetic flux switch connected to a drive and an inductor comprising one permanent magnet (1) and two pairs of magnetic open-cores made of laminated silicon steel having rods (2-9), divided into inner rods (3, 4, 7, 8) and outer rods (2, 5, 6, 9), a winding (10) which is wound around the adjacent inner rods (3, 4) of the first pair of magnetic open-cores and a winding (11) which is wound around the adjacent inner rods (7, 8) of the second pair of magnetic open-cores, the magnetic flux switch is formed in the form of a tape (12) in which magnetic toggle switch (13) made of laminated silicon steel are placed and fixed in slots in an uniform step $\tau_z$, wherein the two pairs of magnetic open-cores facing each other on opposite sides of the switch tape (12), the distance between teeth (14) at the ends of the inner rods (3, 4, 7, 8) and the outer rods (2, 5, 6, 9) for each pair of the magnetic open-cores and the toggle switch (13) is determined according to the equation

$$\tau_1 = \left(k + \frac{1}{2}\right)\tau_z, \qquad\qquad (1)$$

wherein $k = 1, 2, 3...$ is the number of pairs of the teeth (14) for each magnetic open-cores, the teeth (14) are separated from the toggle switch (13) by air gaps - $\delta_1$ and $\delta_2$, the distance between the adjacent rods (2 - 9) in the each pair of magnetic open-cores is determined according to the equation

$$\tau_2 = k\,\tau_z \qquad\qquad (2)$$

the teeth (14) of the each pair of magnetic open-cores are fixed by inserting them into the openings of plates (15, 16) extending parallel to the switch tape (12) and being made of dielectric non-magnetic material, the layers of laminated silicon steel are arranged perpendicular to the direction of movement of the switch tape (12), **characterized in that** the permanent magnet generator is additionally equipped with three magnets (17, 18, 19) and two magnetic bridges (20, 21), one end of the first magnetic bridge (20) rest on the surface of the first magnet (1) and one end of the second magnetic bridge (21) rest on the surface of the second magnet (17) with the same polarity, while the other end of the first magnetic bridge (20) rests on the surface of the third magnet (18) and the other end of the second magnetic bridge (21) rests on the surface of the fourth magnet (19) of opposite polarity, the free surfaces of the first magnet (1), the second magnet (17), the third magnet (18) and the fourth magnet (19) with the second polarity are pressed against the side surfaces of the outer rods (2, 6, 5, 9) of the opposite magnetic open-cores, respectively, through four metal gaskets (22, 23, 24, 25), wherein the magnetic fluxes in the each pair of magnetic open-cores in the adjacent inner rods (3, 4, 7, 8) being directed in one direction.

2. The permanent magnet generator according to claim 1, **characterized in that** the magnetic flux switch tape (12) with a plurality of toggle switch (13) attached to said tape (12) is in the form of a closed loop and is arranged on a disk which is connected to a rotary drive.

3. The permanent magnet generator according to claim 1, **characterized in that** when $k > 1$ in all four metal gaskets (22, 23, 24, 25) in their plane facing the air gaps $\delta_1$ and $\delta_2$, rectangular grooves (26, 27, 28, 29) are made.

4. The permanent magnet generator according to claim 1, **characterized in that** the magnetic flux switch tape (12) is connected to a linear reciprocating drive by a plurality of the toggle switch (13) mounted therein.

**Fig. 1**

**Fig. 2**

**Fig. 3**

**Fig. 4**

Europäisches
Patentamt

European
Patent Office

Office européen
des brevets

# EUROPEAN SEARCH REPORT

Application Number

EP 20 19 1115

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LV 15 501 A (VENTSPILS AUGSTSKOLA [LV]; LATVO AS [LV]) 20 May 2020 (2020-05-20) * abstract * | 1-4 | INV. H02K21/44 H02K35/06 H02K41/03 B62J6/12 |
| A | WO 2013/025170 A1 (AKRIBIS SYSTEMS PTE LTD [SG]; LIM HOWE YUEN [SG]; SAN CHING BOO [SG]) 21 February 2013 (2013-02-21) * abstract; figures 1-10 * | 1-4 | |
| A | JP S60 219959 A (OMRON TATEISI ELECTRONICS CO) 2 November 1985 (1985-11-02) * abstract; figures 1-6 * | 1-4 | |

TECHNICAL FIELDS SEARCHED (IPC)

H02K
B62M
B62J

The present search report has been drawn up for all claims

| Place of search | Date of completion of the search | Examiner |
|---|---|---|
| The Hague | 28 January 2021 | Ganchev, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 19 1115

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2021

| Patent document cited in search report | | Publication date | Patent family member(s) | Publication date |
|---|---|---|---|---|
| LV 15501 | A | 20-05-2020 | ------------------------------------ | |
| WO 2013025170 | A1 | 21-02-2013 | NONE | |
| JP S60219959 | A | 02-11-1985 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004182183 A

- EP 1270389 A2